# EUROPEAN PATENT APPLICATION

(11) **EP 2 712 121 A1**
(43) Date of publication of application: **26.03.2014**
(21) Application number: 12786727.3
(22) Date of filing: 21.03.2012
(51) Int. Cl.: H04L 12/26

(54) **METHOD, APPARATUS AND SYSTEM FOR DETECTING PACKET PATH SIGNAL DEGRADED**

(30) Priority: 19.05.2011 CN 201110130689
(71) Applicant: ZTE Corporation, Shenzhen, Guangdong 518057 (CN)
(72) Inventor: MA, Yuxia, Shenzhen, Guangdong 518057 (CN); SU, Hui, Shenzhen, Guangdong 518057 (CN); XU, Zehua, Shenzhen, Guangdong 518057 (CN)
(74) Representative: Vogel, Andreas
(86) International application number: PCT/CN2012/072676
(87) International publication number: WO 2012/155653

(57) **Abstract**

Disclosed in the present invention are a method, an apparatus and a system for detecting packet Signal Degraded (SD), wherein the method includes: a server layer/server sub-layer determining that there is SD on the server layer/server sub-layer itself, and periodically transmitting SD indication information to a destination node of a packet path of a client layer/client sub-layer, wherein the SD indication information is configured to indicate entry of the packet path into an SD state. In the present invention, reliability of the detection result is ensured and the detection process is simplified.

## Description

### Technical field

The present invention relates to the communication field, and particularly to a method, an apparatus and a system for detecting packet path Signal Degraded (SD).

### Background

In recent years, a packet technology has been gradually applied in transport networks. At the same time, the packet technology also takes in some characteristics of transport networks, such as Operations, Administration and Maintenance (OAM), protection and the like.

In related technologies, the OAM characteristic of the transport networks includes SD. Currently, a direct monitoring method is mainly applied to the detection of the SD on a packet path, i.e. the SD on the packet path is detected by utilizing an existing packet loss measurement result or OAM message packet loss measurement result.

However, the inventors found that the direct monitoring method may fail to detect any SD when the rate of service messages or OAM messages on the packet path is relatively small.

### Summary

The present invention provides a method, an apparatus and a system for detecting packet path SD to at least solve the problem that packet path SD may not be detected by utilizing an existing packet loss measurement result or OAM message packet loss measurement result directly when the rate of service messages or OAM messages on packet path is relatively small in related technologies.

A method for detecting packet path SD is provided according to an aspect of the present invention.

The method for detecting packet path SD according to the present invention includes: a server layer/server sub-layer determining that there is SD on the server layer/server sub-layer itself; and periodically transmitting SD indication information to a destination node of a packet path of a client layer/client sub-layer, wherein the SD indication information is configured to indicate entry of the packet path into an SD state.

The server layer/server sub-layer determining that there is SD on the server layer/server sub-layer itself includes: each section of server layer/server sub-layer corresponding to the packet path in the server layer/server sub-layer detecting whether there is SD on each section of server layer/server sub-layer itself; if any of each section of server layer/server sub-layer detects that there is SD on itself, then determining that there is SD on the server layer/server sub-layer.

Periodically transmitting the SD indication information to the destination node of the packet path of the client layer/client sub-layer includes: carrying the SD indication information in an Operations, Administration and Maintenance (OAM) message; and transmitting the OAM message to the destination node through downstream nodes.

After periodically transmitting the SD indication information to the packet path of the client layer/client sub-layer, the method further includes: the server layer/server sub-layer determining that the SD on the server layer/server sub-layer itself disappears; and stopping periodically transmitting the SD indication information to the packet path of the client layer/client sub-layer.

The SD indication information includes the SD state of the server layer/server sub-layer.

A method for detecting packet path Signal Degraded (SD) is provided according to another aspect of the present invention.

The method for detecting packet path SD includes: a destination node of a packet path of a client layer/client sub-layer receiving SD indication information, wherein the SD indication information is configured to indicate entry of the packet path into an SD state; controlling the packet path to enter into the SD state.

After controlling the packet path to enter into the SD state, the method further includes: the destination node determining that the SD indication information is not received in a preset period of time; controlling the packet path to exit the SD state.

An apparatus for detecting packet path Signal Degraded (SD) is provided according to still another aspect of the present invention.

The apparatus for detecting packet path SD is applied to a server layer/server sub-layer and includes: a determining module, configured to determine that there is SD on the server layer/server sub-layer; a transmitting module, configured to periodically transmit SD indication information to a destination node of a packet path of a client layer/client sub-layer, wherein the SD indication information is configured to indicate entry of the packet path into an SD state.

An apparatus for detecting packet path Signal Degraded (SD) is provided according to still another aspect of the present invention.

The apparatus for detecting packet path SD is applied to a destination node of a packet path of a client layer/client sub-layer and includes: a receiving module, configured to receive SD indication information, wherein the SD indication information is configured to indicate entry of the packet path into an SD state; a controlling module, configured to control the packet path to enter into the SD state.

A system for detecting packet path Signal Degraded (SD) is provided according to still another aspect of the present invention.

The system for detecting packet path SD includes a server layer/server sub-layer and a destination node of a packet path of a client layer/client sub-layer, wherein the server layer/server sub-layer includes: a determining module, configured to determine that there is SD on the server layer/server sub-layer; a transmitting module, configured to periodically transmit SD indication information to the destination node of the packet path of the client layer/client sub-layer, wherein the SD indication information is configured to indicate entry of the packet path into an SD state; the destination node of the packet path of the client layer/client sub-layer includes: a receiving module, configured to receive the SD indication information; and a controlling module, configured to control the packet path to enter into the SD state.

Through the present invention, the SD detection result of a server layer/server sub-layer is used as the SD detection result of a client layer/client sub-layer directly, which can ensure reliability of the detection result and simplify the detection process.

### Brief description of the drawings

The accompanying drawings illustrated here are used for providing further understanding to the present invention and constitute a part of the application. The exemplary embodiments of the present invention and the illustrations thereof are used for explaining the present invention, instead of constituting an improper limitation to the present invention. In the accompanying drawings:
Fig. 1 is a schematic diagram illustrating packet path SD according to an embodiment of the present invention;
Fig. 2 is the first flowchart illustrating a method for detecting packet path SD according to an embodiment of the present invention;
Fig. 3 is the second flowchart illustrating a method for detecting packet path SD according to an embodiment of the present invention;
Fig. 4 is a flowchart illustrating a method for detecting packet path SD according to a preferred embodiment of the present invention;
Fig. 5 is the first structure block diagram illustrating an apparatus for detecting packet path SD according to an embodiment of the present invention;
Fig. 6 is the second structure block diagram illustrating an apparatus for detecting packet path SD according to an embodiment of the present invention; and
Fig. 7 is a structure block diagram illustrating a system for detecting packet path SD according to an embodiment of the present invention.

### Detailed description of the invention

It should be noted that, if there is no conflict, the embodiments in the application and the characteristics in the embodiments can be combined with one another. The present invention will be described in details below with reference to the accompanying drawings and in combination with the embodiments.

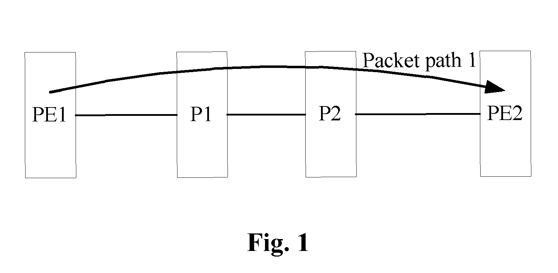

Fig. 1 is a schematic diagram illustrating packet path SD according to an embodiment of the present invention. As shown in Fig. 1, Provider Edges (PEs) and Providers (Ps) are included. Specifically, a direct Synchronous Digital Hierarchy (SDH) physical connection lies between PE1 and P1, P1 and P2, P2 and PE2. A simulated Ethernet packet path 1 is established between PE1 and PE2. Therefore, the packet path 1 and the physical connection are in a relationship of a client layer/client sub-layer and a server layer/server sub-layer.

To simplify description, it is assumed that the path is unidirectional and the direction is PE1->P1->P2->PE2. However, the method can be applied to any layer network or sub-network which satisfies a relation of a server layer/server sub-layer and a client layer/client sub-layer, and nesting thereof. In addition, the present invention has no specific limitations on network layers and implementation techniques of a server layer/server sub-layer and a client layer/client sub-layer.

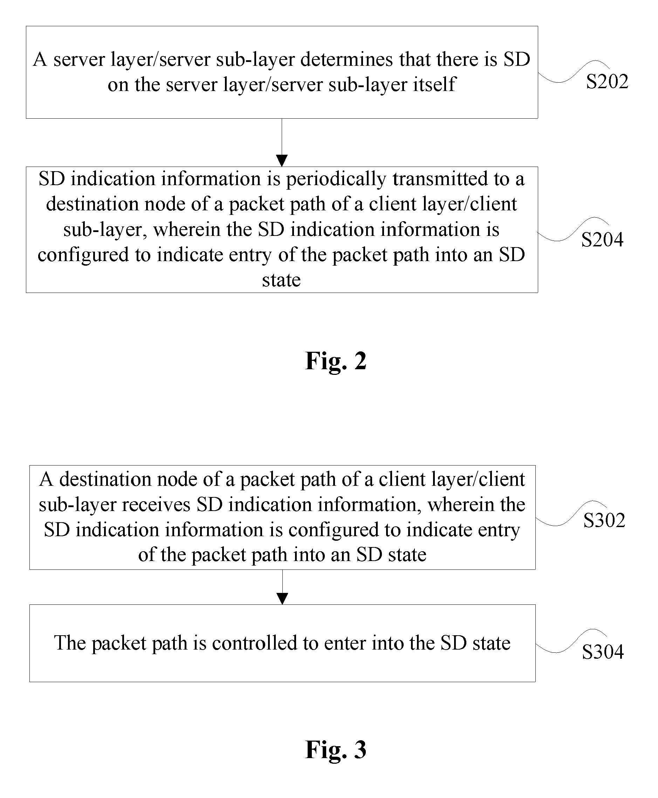

Based on the schematic diagram as shown in Fig. 1, an embodiment of the present invention provides a method for detecting packet path SD. Fig. 2 is the first flowchart illustrating a method for detecting packet path SD according to an embodiment of the present invention. As shown in Fig. 2, the method includes the following Step S202 to Step S204.

Step S202: A server layer/server sub-layer determines that there is SD on the server layer/server sub-layer itself.

Step S204: SD indication information is periodically transmitted to a destination node of a packet path of a client layer/client sub-layer, wherein the SD indication information is configured to indicate entry of the packet path into an SD state.

In related technologies, packet path SD is detected by utilizing an existing packet loss measurement result or OAM message packet loss measurement result directly, thus packet path SD may not be detected when the rate of service messages or OAM messages on packet path is relatively small.

In the embodiment of the present invention, in consideration that the client layer/client sub-layer will statistically have the same probability of bit errors when there are bit errors in the server layer/server sub-layer, thus the bit error rate of the client layer/client sub-layer can be described by that of the server layer/server sub-layer. Therefore, in the embodiment of the present invention, the SD detection result of the server layer/server sub-layer is used as the SD detection result of the client layer/client sub-layer directly, which can ensure reliability of the detection result and simplify the detection process.

Preferably, the process that the server layer/server sub-layer determines that there is SD on the server layer/server sub-layer itself includes: each section of server layer/server sub-layer corresponding to the packet path in the server layer/server sub-layer detects whether there is SD on each section of server layer/server sub-layer itself; if any of each section of server layer/server sub-layer detects that there is SD on itself, then it is determined that there is SD on the server layer/server sub-layer.

Based on the schematic diagram as shown in Fig. 1, packet path 1 corresponds to three sections of server layers/server sub-layers, i.e. PE1 and P1, P1 and P2, P2 and PE2. There may be bit errors in these three sections of server layers/server sub-layers, but there is relatively low probability of simultaneous bit errors. Therefore, instead of the commonly-used method of calculating the bit error rate of the packet path of the client layer/client sub-layer by accumulating the bit error rate of each section of server layer/server sub-layer in related technologies, only the bit error rate of each section of server layer/server sub-layer is monitored separately in the present preferred embodiment and the bit error rate of the client layer/client sub-layer is described by the bit error rate of a certain section of server layer/server sub-layer, thus simplifying the process in which the server layer/server sub-layer determines SD on itself and improving the system processing efficiency.

In addition, there may be a drawback if the bit error rate of the packet path of the client layer/client sub-layer is calculated by accumulating the bit error rate of each section of server layer/server sub-layer, i.e. when a message with a bit error is not discarded in a technology applied by the server layer/server sub-layer, the message with the bit error will be forwarded downstream all the time, therefore, the message will be detected over again on a downstream link. If there is also a bit error in a certain downstream link, the bit error will be accumulated on the downstream link. Therefore, if the client layer/client sub-layer accumulates the bit error rate of each section of server layer/server sub-layer over again, repeated accumulation will result in an inaccurate detection result. Therefore, the present invention can reduce recording and accumulation of the bit error rates of upstream nodes in the technical scenario that the server layer/server sub-layer does not discard messages with bit errors or in the case that only a single section of server layer/server sub-layer has bit errors, thus simplify the processing of the client layer/client sub-layer.

Preferably, periodically transmitting the SD indication information to the destination node of the packet path of the client layer/client sub-layer includes processing as follows: the SD indication information is carried in an OAM message and the OAM message is transmitted to the destination node through downstream nodes.

Based on the schematic diagram as shown in Fig. 1, if there is SD on the server layer/server sub-layer between PE1 and P1, then node P1 transmits an OAM message carrying SD indication information to P2 and PE2, the downstream nodes of the node P1, after detecting the SD, thus simplify the SD detection process of packet path and ensure the reliability of the detection result.

Preferably, the relation between the server layer/server sub-layer and the client layer/client sub-layer, the packet path, is predetermined according to one of the following methods: the relation is determined according to configurations of the server layer/server sub-layer and the client layer/client sub-layer; the relation is determined according to a forwarding table between the server layer/server sub-layer and the client layer/client sub-layer.

Preferably, after periodically transmitting the SD indication information to the packet path of the client layer/client sub-layer, the method further includes: the server layer/server sub-layer determines that the SD on the server layer/server sub-layer itself disappears and then stops periodically transmitting the SD indication information to the packet path of the client layer/client sub-layer.

Considering the self-recovery of SD on the server layer/server sub-layer, in the present preferred embodiment, the server layer/server sub-layer stops periodically transmitting the SD indication information to the packet path of the client layer/client sub-layer after determining that the SD on the server layer/server sub-layer itself disappears, so that the client layer/client sub-layer does not receive the SD indication information and exits the SD state, thus ensuring that the client layer/client sub-layer returns to a normal work state if possible to ensure the system performance.

Preferably, the SD indication information includes the SD state of the server layer/server sub-layer.

Preferably, the SD indication information further includes at least one of the followings: a position identifier of the server layer/server sub-layer and a transmitting period of the SD indication information.

Based on the schematic diagram as shown in Fig. 1, an embodiment of the present invention further provides a method for detecting packet path SD. Fig. 3 is the second flowchart illustrating a method for detecting packet path SD according to an embodiment of the present invention. As shown in Fig. 3, the method includes the following Step S302 to Step S304.

Step S302: A destination node of a packet path of a client layer/client sub-layer receives SD indication information, wherein the SD indication information is configured to indicate entry of the packet path into an SD state.

Step S304: The packet path is controlled to enter into the SD state.

In related technologies, packet path SD is detected by utilizing an existing packet loss measurement result or OAM message packet loss measurement result directly, thus packet path SD may not be detected when the rate of service messages or OAM messages on packet path is relatively small.

In the embodiment the present invention, in consideration that the client layer/client sub-layer will statistically have the same probability of bit errors when there are bit errors in the server layer/server sub-layer, thus the bit error rate of the client layer/client sub-layer can be described by that of the server layer/server sub-layer. Therefore, in the embodiment of the present invention, the client layer/client sub-layer uses the SD detection result of the server layer/server sub-layer directly to control the packet path to enter into the SD state, which can ensure reliability of the detection result and simplify the detection process.

Preferably, after controlling the packet path to enter into the SD state, the method further includes: the destination node determines that the SD indication information is not received in a preset period of time; the packet path is controlled to exit the SD state.

Considering the self-recovery of SD on the server layer/server sub-layer, in the present preferred embodiment, the destination node controls the packet path to exit the SD state in the case that the SD indication information is not received within a preset period of time, thus ensuring that the client layer/client sub-layer returns to a normal work state if possible to ensure the system performance.

By an example, an implementation process of an embodiment of the present invention, which combines the operations of the server layer/server sub-layer and the operations of the client layer/client sub-layer, is described in details below.

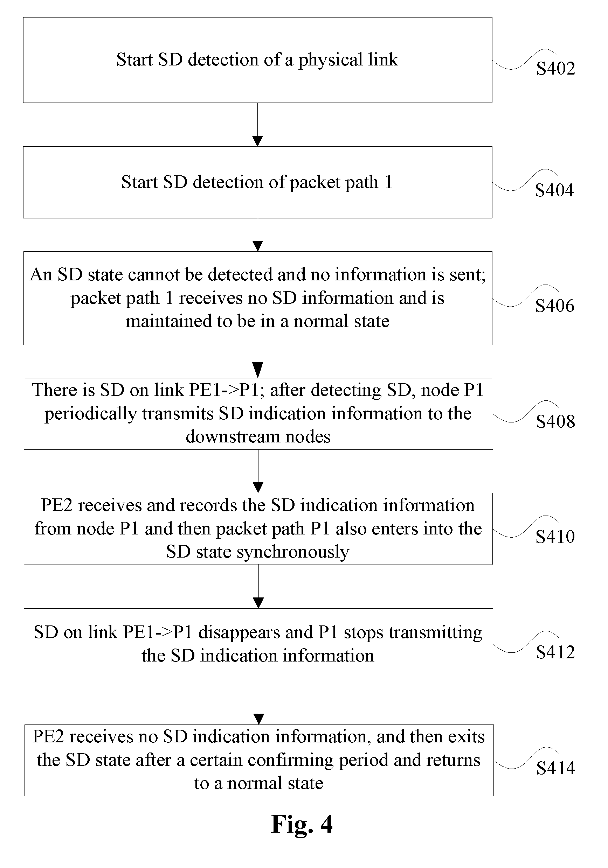

Fig. 4 is a flowchart illustrating a method for detecting packet path SD according to a preferred embodiment of the present invention. As shown in Fig. 4, the method includes the following Step S402 to Step S414.

Step S402: SD detection of physical links (PE1->P1, P1->P2, P2->PE2) is started.

Step S404: SD detection of packet path 1 is started, and it enters into a state that allows to receive SD indication information and to determine SD.

Step S406: In normal conditions, an SD state cannot be detected on each link and no information is sent to a client layer. The packet path 1 receives no SD information from any upstream nodes and is maintained to be in a normal state.

Step S408: Link PE1->P1 has detected SD and enters into the SD state. After detecting the SD, node P1 writes SD generating indication information, a position identifier (which is node P1 in this example) of the server layer/server sub-layer and an information transmitting period (which is 1 second in this example) in a specific OAM message, inserts the OAM message into the packet path 1, and periodically transmits the OAM message to a downstream node.

Step S410: PE2, the destination node of packet path 1, receives the OAM message from node P1 and records the indication information including SD generating indication information etc. so that packet path P1 also enters into the SD state synchronously.

Step S412: SD on the link PE1->P1 disappears and it exits the SD state, then P1 stops transmitting the SD indication information.

Step S414: SD indication information is not received from the upstream node by PE2, the destination node of the packet path 1. After a certain confirming period, it is determined that the server layer has exited the SD state, and then packet path 1 also exits the SD state and returns to a normal state.

It should be noted that, the steps illustrated in the flowcharts of the accompanying drawings may be executed in a computer system such as a group of computer executable instructions. In addition, although logical sequences have been illustrated in the flowcharts, in some cases, the steps as illustrated or described may be executed in sequences which are different from those described here.

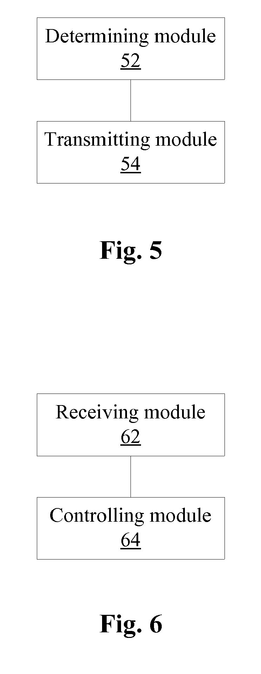

An embodiment of the present invention provides an apparatus for detecting packet path SD. The apparatus for detecting packet path SD may be applied to a server layer/server sub-layer and may be applied to realize the above methods for detecting packet path SD. Fig. 5 is the first structure block diagram illustrating an apparatus for detecting packet path SD according to an embodiment of the present invention. As shown in Fig. 5, the apparatus includes: a determining module 52 and a transmitting module 54. The structure will be described in details below.

The determining module 52 is configured to determine that there is SD on the server layer/server sub-layer; the transmitting module 54 is coupled with the determining module 52 and configured to, after the determining module 52 determines that there is SD on the server layer/server sub-layer, periodically transmit SD indication information to a destination node of a packet path of a client layer/client sub-layer, wherein the SD indication information is configured to indicate entry of the packet path into an SD state.

It should be noted that, the apparatus for detecting packet path SD in the embodiments of the apparatuses corresponds to an embodiment of a method above. The specific implementation process of the apparatus has been described in details in the embodiment of the method, and will not be repeated here.

An embodiment of the present invention provides an apparatus for detecting packet path SD. The apparatus for detecting packet path SD may be applied to a destination node of a packet path of a client layer/client sub-layer and may be applied to realize the above methods for detecting packet path SD. Fig. 6 is the second structure block diagram illustrating an apparatus for detecting packet path SD according to an embodiment of the present invention. As shown in Fig. 6, the apparatus includes a receiving module 62 and a controlling module 64. The structure will be described in details below.

The receiving module 62 is configured to receive SD indication information, wherein the SD indication information is configured to indicate entry of the packet path into an SD state; the controlling module 64 is coupled with the receiving module 62 and configured to control the packet path to enter into the SD state according to the SD indication information received by the receiving module 62.

It should be noted that, the apparatus for detecting packet path SD in the embodiments of the apparatuses corresponds to an embodiment of a method above. The specific implementation process of the apparatus has been described in details in the embodiment of the method, and will not be repeated here.

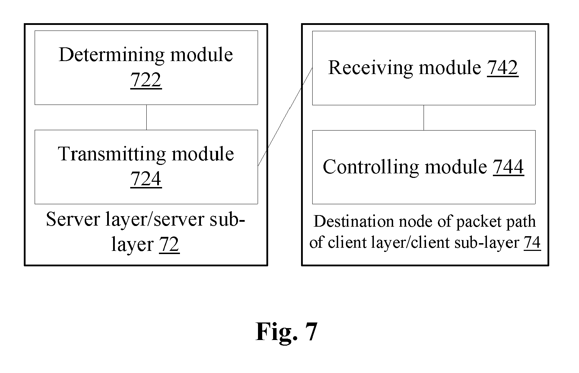

An embodiment of the present invention provides a system for detecting packet path SD. The system for detecting packet path SD may be applied to realize the above methods for detecting packet path SD. Fig. 7 is a structure block diagram illustrating a system for detecting packet path SD according to an embodiment of the present invention. As shown in Fig. 7, the system includes a server layer/server sub-layer 72 and a destination node 74 of a packet path of a client layer/client sub-layer. The server layer/server sub-layer 72 includes: a determining module 722 and a transmitting module 724. The destination node 74 of the packet path of the client layer/client sub-layer includes a receiving module 742 and a controlling module 744. The structures of these modules will be described in details below.

The determining module 722 is configured to determine that there is SD on the server layer/server sub-layer; the transmitting module 724 is coupled with the determining module 722 and configured to, after the determining module 722 determines that there is SD on the server layer/server sub-layer, periodically transmit SD indication information to the destination node of the packet path of the client layer/client sub-layer, wherein the SD indication information is configured to indicate entry of the packet path into an SD state; the receiving module 742 is coupled with the transmitting module 724 and configured to receive the SD indication information transmitted by the transmitting module 724; the controlling module 744 is coupled with the receiving module 742 and configured to, according to the SD indication information received by the receiving module 742, control the packet path to enter into the SD state.

It should be noted that, the system for detecting packet path SD in the embodiments of the apparatuses corresponds to an embodiment of a method above. The specific implementation process of the system has been described in details in the embodiment of the method, and will not be repeated here.

To sum up, according to the embodiments of the present invention, a method, an apparatus and a system for detecting packet path SD are provided. Through the present invention, the SD detection result of a server layer/server sub-layer is directly used as the SD detection result of a client layer/client sub-layer. The present invention can solve the problem that packet path SD may not be detected by utilizing an existing packet loss measurement result or OAM message packet loss measurement result directly when the rate of service messages or OAM messages on packet path is relatively small in related technologies, and ensure the reliability of the detection result and simplify the detection process.

Obviously, those skilled in the art should understand that the modules or steps of the present invention may be implemented by general computing devices and centralized in a single computing device or distributed in a network consisting of multiple computing devices. Optionally, the modules or steps may be implemented by program codes executable by the computing devices, so that they may be stored in a storage device and executed by a computing device, or they may be realized by being respectively made into individual integrated circuit modules or a plurality of modules or steps may be made into a single integrated circuit module. By doing so, the present invention is not limited to any specific combination of hardware and software.

The above are only preferred embodiments of the present invention and should not be used to limit the present invention. For those skilled in the art, the present invention may have various modifications and changes. Any modifications, equivalent replacements, improvements and the like within the spirit and principle of the present invention shall fall within the scope of protection of the present invention.

## Claims

1. A method for detecting packet path Signal Degraded (SD), **characterized by** comprising:
a server layer/server sub-layer determining that there is SD on the server layer/server sub-layer itself; and
periodically transmitting SD indication information to a destination node of a packet path of a client layer/client sub-layer, wherein the SD indication information is configured to indicate entry of the packet path into an SD state.

2. The method according to claim 1, **characterized in that** the server layer/server sub-layer determining that there is SD on the server layer/server sub-layer itself comprises:
each section of server layer/server sub-layer corresponding to the packet path in the server layer/server sub-layer detecting whether there is SD on each section of server layer/server sub-layer itself;
if any of each section of server layer/server sub-layer detects that there is SD on itself, then determining that there is SD on the server layer/server sub-layer.

3. The method according to claim 1, **characterized in that** periodically transmitting the SD indication information to the destination node of the packet path of the client layer/client sub-layer comprises:
carrying the SD indication information in an Operations, Administration and Maintenance (OAM) message; and
transmitting the OAM message to the destination node through downstream nodes.

4. The method according to claim 1, **characterized in that** after periodically transmitting the SD indication information to the packet path of the client layer/client sub-layer, the method further comprises:
the server layer/server sub-layer determining that the SD on the server layer/server sub-layer itself disappears; and
stopping periodically transmitting the SD indication information to the packet path of the client layer/client sub-layer.

5. The method according to any one of claims 1 to 4, **characterized in that** the SD indication information comprises the SD state of the server layer/server sub-layer.

6. A method for detecting packet path Signal Degraded (SD), **characterized by** comprising:
a destination node of a packet path of a client layer/client sub-layer receiving SD indication information, wherein the SD indication information is configured to indicate entry of the packet path into an SD state;
controlling the packet path to enter into the SD state.

7. The method according to claim 6, **characterized in that** after controlling the packet path to enter into the SD state, the method further comprises:
the destination node determining that the SD indication information is not received in a preset period of time;
controlling the packet path to exit the SD state.

8. An apparatus for detecting packet path Signal Degraded (SD), **characterized in that** the apparatus is applied to a server layer/server sub-layer and comprises:
a determining module, configured to determine that there is SD on the server layer/server sub-layer;
a transmitting module, configured to periodically transmit SD indication information to a destination node of a packet path of a client layer/client sub-layer, wherein the SD indication information is configured to indicate entry of the packet path into an SD state.

9. An apparatus for detecting packet path Signal Degraded (SD), **characterized in that** the apparatus is applied to a destination node of a packet path of a client layer/client sub-layer and comprises:
a receiving module, configured to receive SD indication information, wherein the SD indication information is configured to indicate entry of the packet path into an SD state;
a controlling module, configured to control the packet path to enter into the SD state.

10. A system for detecting packet path Signal Degraded (SD), **characterized by** comprising a server layer/server sub-layer and a destination node of a packet path of a client layer/client sub-layer, wherein
the server layer/server sub-layer comprises:
a determining module, configured to determine that there is SD on the server layer/server sub-layer;
a transmitting module, configured to periodically transmit SD indication information to the destination node of the packet path of the client layer/client sub-layer, wherein the SD indication information is configured to indicate entry of the packet path into an SD state;
the destination node of the packet path of the client layer/client sub-layer comprises:
a receiving module, configured to receive the SD indication information; and
a controlling module, configured to control the packet path to enter into the SD state.
